# EUROPÄISCHE PATENTSCHRIFT

(11) **EP 1 454 768 B1**
(45) Veröffentlichungstag und Bekanntmachung des Hinweises auf die Patenterteilung: **01.02.2012**
(21) Anmeldenummer: 04003274.0
(22) Anmeldetag: 13.02.2004
(51) Int. Cl.: B60C 11/04, B60C 11/11, B60C 11/12

(54) **Reifenprofil eines Fahrzeugluftreifens**
Tread pattern for a vehicle tire
Sculpture des bandes de roulement pour un pneu de véhicule

(30) Priorität: 07.03.2003 DE 10309970
(43) Veröffentlichungstag der Anmeldung: 08.09.2004
(73) Patentinhaber: Continental Reifen Deutschland GmbH, 30165 Hannover (DE)
(72) Erfinder: Rösner, Michael, 30926 Seelze (DE); Schmalz, Manfred, 2532 Gumboldskirchen (AT); Komp, Jens, 22765 Hamburg (DE)
(74) Vertreter: Finger, Karsten

(56) Entgegenhaltungen:
- EP-A- 0 325 552
- EP-A- 0 678 402
- EP-A1- 0 588 781
- WO-A-01/39996
- DE-A- 19 507 788
- "M+S-BREITREIFEN AUS MODERNER PNEUSCHMIEDE" GUMMIBEREIFUNG, BIELEFELDER VERLAGSANSTALT KG. BIELEFELD, DE, Bd. 69, Nr. 4, 1. April 1993 (1993-04-01), Seite 24 XP000429074 ISSN: 0017-5609

## Beschreibung

Die Erfindung betrifft ein Reifenprofil eines Fahrzeugluftreifens gemäß dem Oberbegriff des Patentanspruchs 1.

Ein derartiges Reifenprofil ist beispielsweise aus "M+S-Breitreifen aus moderner Pneuschmiede" Gummibereifung, Bielefelder Verlagsanstalt KG. Bielefeld, DE, Bd.69, Nr.4, 1.April 1993 (1993-04-01), S.24 XPO00429074 ISSN: 0017-5609 bekannt geworden.

Aus der DE 28 14 945 A1 ist ein Reifenprofil eines Fahrzeugluftreifens bekannt geworden, welches durch wenigstens 3 zueinander parallele Umfangsrillen voneinander getrennte Laufbänder mit Profilklötzen aufweist, wobei jedes Laufband aus zwei Reihen von Profilklötzen besteht, wobei die Profilklötze beider Reihen jeweils die gleiche Form und Ausrichtung bezüglich der Umfangsrichtung aufweisen, und wobei jeweils ein Profilklotz einer Reihe durch wenigstens zwei Rillen von zwei benachbarten Profilklötzen der anderen Reihe getrennt ist. Es wird insbesondere das Problem der Geräuschminderung des Laufgeräusches angesprochen. Das Problem der Verminderung von Laufgeräuschen ist aber nur eines von vielen Problemen und Zielkonflikten bei der Entwicklung und Gestaltung von Reifenprofilen, denn neben einem möglichst ruhigen Lauf sollen die Reifenprofile einen möglichst geringen Rollwiderstand und gute Traktions- und Bremseigenschaften aufweisen. Darüber hinaus soll ein mit einem entsprechenden Reifenprofil ausgerüsteter Fahrzeugluftreifen gute Handling- und Komforteigenschaften und ein möglichst optimiertes Lenkverhalten zeigen, wobei bei Letzterem das Vermögen des Profils eine große Rolle spielt, Querkräfte aufzunehmen.

Es ist eine Vielzahl von Lösungsansätzen bekannt, diese Ziele in einem einzigen Reifenprofil zu vereinen, wobei der Fachmann grundsätzlich zwischen Blockprofilen und Bandprofilen unterscheidet. Bei den Blockprofilen ist eine Vielzahl von getrennt angeordneten Blöcken auf dem Laufstreifen angeordnet, wobei die einzelnen Profilblöcke insgesamt das Reifenprofil bilden. Die Blöcke können dabei beispielsweise pfeilartig angeordnet sein, so dass ein laufrichtungsgebundenes Profil entsteht, welches geeignet sein soll, Wasser besonders gut zu verdrängen. Reifen mit ausgeprägten Blockprofilen besitzen eine Vielzahl von Kanten, welche sich besonders vorteilhaft auf das Traktionsvermögen, insbesondere auf Nässe, auswirken. Der Nachteil derartiger Blockprofile ist darin zu sehen, dass das Profil insgesamt relativ weich ist und dass durch die hohe Anzahl von Kanten ein derart ausgerüsteter Reifen relativ laut ist.

Ein anderer grundsätzlicher Ansatz ist das so genannte Bandprofil, bei dem der Laufsteifen durch mehrere Umfangsrillen in Bänder bzw. Ringe unterteilt ist, wobei diese Ringe Quer- oder Schrägnuten aufweisen. Positiv an Bandprofilen ist ein gleichmäßiger Abrieb und gute Handlingeigenschaften, was durch die relativ steifen Bänder ermöglicht wird. Diese relativ steifen Bänder können Querkräfte gut aufnehmen, wodurch das Lenkverhalten und die Kurvenbeschleunigung derartiger Profile ausgezeichnet sind. Nachteilig ist an derartigen Bandprofilen, dass sie weniger Kanten aufweisen und daher auf Nässe relativ schlechtes Traktions- und Bremsverhalten zeigen.

Aus der DE 28 14 945 A1 ist ein Reifenprofil, insbesondere in Bezug auf die dortige Figur 4, beschrieben, bei dem bereits versucht wurde, die Vorzüge eines Bandprofiles mit denen eines Blockprofiles zu verbinden, und zwar dadurch, dass die einzelnen Bänder aus ineinander verschränkten Blockelementen bestehen, wodurch ein unterbrochenes Bandprofil mit relativ hoher Kantenanzahl entsteht, wobei sich die Elemente beim Auftreten von Querkräften gegeneinander abstützen, und zwar dadurch, dass sie ineinander verschränkt bzw. miteinander verzahnt sind.

Aus der US 4,807,679 B ist ein Profil bekannt, bei dem die mittleren Laufbänder Profilklötze in Keilform aufweisen, wobei jeweils zwei Profilklötze einer Reihe sich mit ihren Keilflächen gegeneinander beim Auftreten von Querkräften abstützen. Die Umfarigsrillen sind hierbei jedoch nicht gerade, was sich negativ bei Aquaplaningverhältnissen auswirkt.

Aus der DE 197 02 675 C2 ist ein Reifenprofil bekannt, bei dem Profilklötze der inneren Laufbänder konvex- und konkav-gebogene Seiten aufweisen, welche im Wechsel von 180 ° angeordnet sind. Aus der EP 0 681 930 B1 ist ein Profil mit Bezug auf die dortige

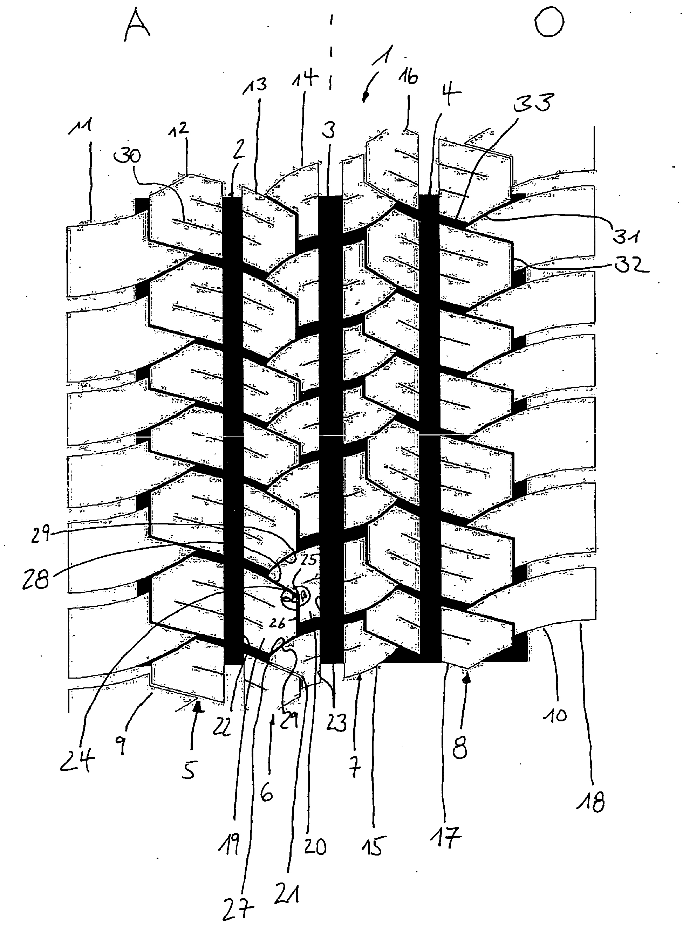

Figur 2b beschrieben, dessen Profilblöcke der inneren Laufbänder jeweils Z-förmig ausgestaltet sind und derart ineinander greifen.

Aus der WO 01/39996 A1 ist ein Reifenprofil bekannt geworden, welches aus vier Umfangsrillen besteht, welche drei mittige Laufbänder aus je zwei axial benachbarten Profilklötzen untergliedert und zwei äußere Laufbänder mit je drei axial benachbarten Profilklötzen untergliedert. Die Kanten der Profilklötze sind gerade.

Aufgabe der Erfindung ist es, ein Reifenprofil der eingangs geschilderten Art dahingehend zu verbessem, dass die Laufbänder eine hohe Anzahl von wirksamen Kanten aufweisen und gleichzeitig so ausgebildet sind, dass sie insbesondere entstehende Querkräfte gut aufnehmen können. Zudem soll das Reifenprofil laufrichtungsunabhängig gestaltet sein.

Diese Aufgabe wird mit einem Reifenprofil der eingangs geschilderten Art gelöst, welche die Merkmale des Patentanspruchs 1 aufweist.

Erfindungsgemäß ist also vorgesehen, dass die Profilklötze einer Reihe eine einen Winkel α einschließende Ecke und eine konkave Seite aufweisen, und dass die Profilklötze der anderen Reihe eine einen Winkel β einschließende Ecke und eine konvexe Seite aufweisen, wobei die Ecken und die konvexen und konkaven Seiten einander zugewandt sind. Kurz gefasst besteht die Erfindung also darin, die Laufbänder jeweils in zwei Reihen von Profilblöcken aufzugliedern, wobei diese Blöcke jeweils Kanten und Bögen aufweisen, welche einander zugewandt sind, dass eine zickzackartige Abfolge von Profilblöcken entsteht, die durch Ecken und Bögen puzzelartig ineinander greifen bzw. miteinander verzahnt sind. Weiterhin ist vorgesehen, dass das Profil symmetrisch ausgestaltet ist, wobei eine axial mittige Umfangsrille das Profil in zwei Hälften teilt, wobei die eine Hälfte zur anderen Hälfte um 180 ° gedreht ist. Der mit dem Profil versehene Reifen ist laufrichtungsunabhängig montierbar. Es spielt also keine Rolle, auf welcher Fahrzeugseite ein derartiger Reifen montiert ist.-----

Dies hat auf überraschend einfache Art und Weise den Effekt, dass jeder einzelne Profilblock eines Laufbandes beim Auftreten von Querkräften auf seine die Umfangsrille begrenzende gerade Kante sich gegen zwei gegenüberliegende Profilblöcke eines Laufbandes abstützt. Ferner hat diese Ausgestaltung die Wirkung, dass relativ viele Einzelkanten gebildet werden, durch welche ein gutes Traktionsvermögen des Reifenprofiles ermöglicht wird. Die Ausgestaltung eines Bogens, d.h. einer konkaven bzw. konvexen Seite bietet den Vorteil, die Kante relativ lang ausgestalten zu können, was sich positiv auf geringe Geräuschentwicklung und auch ebenfalls auf ein gutes Traktionsvermögen auswirkt.

In vorteilhaften Ausgestaltungen der Erfindung kann dann vorgesehen sein, das Profil symmetrisch auszugestalten, wobei dann vorgesehen sein kann, dass eine axial mittige Umfangsrille das Profil in zwei Hälften teilt, wobei die eine Hälfte zur anderen Hälfte um 180 ° gedreht ist. Bei dieser Ausgestaltung kann der mit dem Profil versehene Reifen dann laufrichtungsunabhängig montiert werden. Es spielt also keine Rolle, auf welcher Fahrzeugseite ein derartiger Reifen montiert ist.

In weiteren vorteilhaften Ausgestaltungen der Erfindung kann dann vorgesehen sein, die Rillen zwischen den konkaven und konvexen Seiten und zwischen sich gegenüberliegenden Ecken der Profilblöcke in einer Breite von 0,5 - 3 mm auszuführen.

In einer weiteren vorteilhaften Ausgestaltung ist vorgesehen, die Profilklötze mit 1 - 5 Feineinschnitten zu versehen, wobei diese Feineinschnitte in einer weiteren praktischen Ausgestaltung der Erfindung sinusartig sein können.

Weitere Vorteile und Ausgestaltungen der Erfindung werden anhand eines Ausführungsbeispiels in der Beschreibung anhand einer Zeichnung und in den Patentansprüchen näher beschrieben. Die einzige Zeichnung eines Ausführungsbeispiels der Erfindung zeigt die Aufsicht eines Teilausschnitts eines erfindungsgemäßen Reifenprofils 1. Dieses ist durch Umfangsrillen 2, 3, 4 in voneinander getrennte Laufbänder 5 - 8 geteilt, wobei die Laufbänder 5 und 8 die Schulterbereiche 9, 10 darstellen. Die Laufbänder 5 - 8 bestehen jeweils aus zwei Reihen 11, 12; 13, 14; 15, 16; 17, 18 von Profilklötzen, welche im Folgenden anhand von Profilklötzen 19 - 21 des Laufbandes 6 näher beschrieben werden. Diese Profilklötze 19 - 21 weisen jeweils eine äußere, gerade und parallel zu den Umfangsrillen 2 bzw. 3 verlaufende Kante 22, 23 auf. Eine Ecke 24 des Profilklotzes 19 schließt einen Winkel α ein, während eine Ecke 25 der Profilklötze 20, 21 einen Winkel β einschließt. Im gezeigten Ausführungsbeispiel beträgt der Winkel α 45 °, der Winkel β beträgt 315 °. Die Summe beider Winkel α und β beträgt also 360 °. Die Ecken 24, 25 der Profilklötze 19 und 20 sind einander zugewandt, so dass der Profilklotz 20 den Profilklotz 19 umgreift. Von der Ecke 24 verläuft eine gerade Kante 26, welche in eine konkave Seite 27 mündet. An die Ecke 25 des Profilklotzes 20 wiederum schließt sich eine gerade Kante 28 an, welche in eine konvexe 29 mündet. Diese konvexe Seite 29 wiederum ist mit der geraden Kante 23 verbunden. Die konkave Seite 27 des Profilklotzes 19 liegt der konvexen Seite 29 des Profilklotzes 21 gegenüber.

Durch die Abfolge von Ecken 24, 25 und konkaven Seiten 27 und konvexen Seiten 29 der Profilklötze 19, 20, 21 ergibt sich ein Muster von zickzackartig wechselnden Profilklötzen 19, 20, 21 in den Reihen 13, 14, wobei die Profilklötze jeweils eckige und Verzahnungen mit zwei Profilklötzen der jeweils anderen Reihe aufweisen.

Hierdurch können sich die Profilklötze jeder Reihe gegen die Profilklötze der anderen Reihe abstützen, insbesondere beim Auftreten von Querkräften.

Die Umfangsrille 3 teilt das Reifenprofil 1 in zwei Hälften A und O, wobei beide Hälften A und O gleich aufgebaut sind, wobei jedoch eine Hälfte A gegenüber der anderen Hälfte O um 180 ° gedreht ist, so dass ein laufrichtungsungebundenes Profil entsteht. Die Profilklötze 19 - 21 sind mit Feineinschnitten 30 versehen, wodurch weitere Griffkanten gebildet werden. Die Feineinschnitte 30 können, wie in der Zeichnung dargestellt, einen geraden Verlauf aufweisen, sie können jedoch auch sinusartig verlaufen.

Wie in der Zeichnung ebenfalls zu erkennen ist, sind die Profilklötze 19 - 21 der Reihenpaare 11, 12; 13, 14; 15, 16; 17, 18 durch Nuten 31, 32 und 33 voneinander getrennt, wobei diese Nuten 31 - 33 eine Breite von 0,5 - 4 mm aufweisen können.

### Bezugszeichenliste

### (Teil der Beschreibung)

- 1: Reifenprofil
- 2: Umfangsrille
- 3: Umfangsrille
- 4: Umfangsrille
- 5: Laufband
- 6: Laufband
- 7: Laufband
- 8: Laufband
- 9: Schulterbereich
- 10: Schulterbereich
- 11: Reihe
- 12: Reihe
- 13: Reihe
- 14: Reihe
- 15: Reihe
- 16: Reihe
- 17: Reihe
- 18: Reihe
- 19: Profilklotz
- 20: Profilklotz
- 21: Profilklotz
- 22: gerade Kante
- 23: gerade Kante
- 24: Ecke
- 25: Ecke
- 26: Kante
- 27: konkave Seite
- 28: Kante
- 29: konvexe Seite
- 30: Feineinschnitt
- 31: Nut
- 32: Nut
- 33: Nut

## Patentansprüche

1. Reifenprofil (1) eines Fahrzeugluftreifens, mit durch 3 zueinander parallelen Umfangsrillen (2, 3, 4) voneinander getrennten Laufbändern (5, 6, 7, 8) mit Profilklötzen (19, 20), wobei jedes Laufband (5 - 8) aus wenigstens zwei Reihen (11, 12; 13, 14; 15, 16; 17, 18) von Profilklötzen (19; 20) besteht, wobei die Profilklötze (19; 20) beider Reihen (11, 12; 13, 14; 15, 16; 17, 18) jeweils die gleiche Form und Ausrichtung bezüglich der Umfangsrichtung aufweisen, wobei die Profilklötze (19, 20) jeweils eine gerade, die Umfangsrille (2, 3, 4) begrenzende Kante (22, 23) aufweisen und wobei jeweils ein Profilklotz (19) einer Reihe (11, 13, 15, 17) durch wenigstens zwei Rillen (31, 32) von zwei benachbarten Profilklötzen (20, 21) der anderen Reihe (12, 14, 16, 18) getrennt ist, **dadurch gekennzeichnet , dass** jedes Laufband (5-8) aus zwei Reihen (11, 12; 13, 14; 15, 16; 17, 18) von Profilklötzen (19; 20) besteht, dass die Profilklötze (19) einer Reihe (13) eine einen Winkel α einschließende Ecke (24) und eine konkave Seite (27) aufweisen und dass die Profilklötze (20) der anderen Reihe (14) eine einen Winkel β einschließende Ecke (25) und eine konvexe Seite (29) aufweisen, wobei die Ecken (24, 25) und die konvexen (29) und konkaven (27) Seiten einander zugewandt sind und dass eine Umfangsrille (3) das Reifenprofil (1) in zwei Profilhälften A und O teilt, wobei eine Hälfte A gegenüber der anderen Hälfte O um 180 ° gedreht ist, so dass das Reifenprofil laufrichtungsunabhängig ist.

2. Reifenprofil nach Anspruch 1, **dadurch gekennzeichnet, dass** die Breite der Rillen (31, 32) zwischen 0,5 und 3 mm beträgt.

3. Reifenprofil nach wenigstens einem der vorangegangenen Ansprüche, **dadurch gekennzeichnet, dass** die Profilklötze (19, 20, 21) mit 1 bis 5 Feineinschnitten versehen sind.

4. Reifenprofil nach Anspruch 3, **dadurch gekennzeichnet, dass** die Feineinschnitte sinusartig sind.

## Claims

1. Tyre tread profile (1) of a pneumatic vehicle tyre, with tread strips (5, 6, 7, 8) that are separated from one another by 3 mutually parallel circumferential grooves (2, 3, 4) and have profile blocks (19, 20), each tread strip (5-8) consisting of at least two rows (11, 12; 13, 14; 15, 16; 17, 18) of profile blocks (19; 20), the profile blocks (19; 20) of both rows (11, 12; 13, 14; 15, 16; 17, 18) each having the same form and alignment with respect to the circumferential direction, the profile blocks (19, 20) each having a straight edge (22, 23), delimiting the circumferential grooves (2, 3, 4), and a profile block (19) of one row (11, 13, 15, 17) being respectively separated from two neighbouring profile blocks (20, 21) of the other row (12, 14, 16, 18) by at least two grooves (31, 32), **characterized in that** each tread strip (5-8) consists of two rows (11, 12; 13, 14; 15, 16; 17, 18) of profile blocks (19; 20), **in that** the profile blocks (19) of one row (13) have a corner (24) including an angle α, and a concave side (27) and **in that** the profile blocks (20) of the other row (14) have a corner (25) including an angle β and a convex side (29), the corners (24, 25) and the convex (29) and concave (27) sides facing one another, and **in that** the circumferential groove (3) divides the tyre tread profile (1) into two profile halves A and O, one half A being turned with respect to the other half O by 180°, so that the tyre tread profile is independent of the running direction.

2. Tyre tread profile according to Claim 1, **characterized in that** the width of the grooves (31, 32) is between 0.5 and 3 mm.

3. Tyre tread profile according to at least one of the preceding claims, **characterized in that** the profile blocks (19, 20, 21) are provided with 1 to 5 sipes.

4. Tyre tread profile according to Claim 3, **characterized in that** the sipes are sinusoidal.

## Revendications

1. Profil (1) de bandage pneumatique pour roue de véhicule,
qui présente des bandes de roulement (5, 6, 7, 8) séparées les unes des autres par 3 rainures périphériques (2, 3, 4) parallèles les unes aux autres,
les bandes de roulement étant dotées de blocs profilés (19, 20), chaque bande de roulement (5-8) étant constituée d'au moins deux rangées (11, 12; 13, 14; 15, 16; 17, 18) de blocs profilés (19; 20),
les blocs profilés (19; 20) des deux rangées (11, 12; 13, 14; 15, 16; 17, 18) présentant tous la même forme et la même orientation par rapport à la direction périphérique,
les blocs profilés (19, 20) présentant tous un bord (22, 23) rectiligne qui délimite la rainure périphérique (2, 3, 4) et un bloc profilé (19) d'une rangée (11, 13, 15, 17) étant séparé par au moins deux rainures (31, 32) de deux blocs profilés (20, 21) voisins de l'autre rangée (12, 14, 16, 18),
**caractérisé en ce que**
chaque bande de roulement (5-8) est constituée de deux rangées (11, 12; 13, 14; 15, 16; 17, 18) de blocs profilés (19; 20),
**en ce que** les blocs profilés (19) d'une rangée (13) présentent un coin (24) qui inclut un angle α et un côté concave (27) et **en ce que** les blocs profilés (20) de l'autre rangée (14) présentent un coin (25) qui inclut un angle β et un côté convexe (29) et
**en ce que** les coins (24, 25), les côtés convexes (29) et les côtés concaves (27) sont tournés les uns vers les autres et une rainure périphérique (3) divise le profil (1) de bandage en deux moitiés de profil A et O, une moitié A étant tournée de 180° par rapport à l'autre moitié O de telle sorte que le profil du bandage soit indépendant du sens d'avancement.

2. Profil de bandage pneumatique selon la revendication 1, **caractérisé en ce que** la largeur des rainures (31, 32) est comprise entre 0,5 et 3 mm.

3. Profil de bandage pneumatique selon au moins l'une des revendications précédentes, **caractérisé en ce que** les blocs profilés (19, 20, 21) sont dotés de 1 à 5 fines entailles.

4. Profil de bandage pneumatique selon la revendication 3, **caractérisé en ce que** les fines entailles ont une forme sinusoïdale.
